# EUROPÄISCHE PATENTANMELDUNG

(11) **EP 2 447 052 A1**
(43) Veröffentlichungstag der Anmeldung: **02.05.2012**
(21) Anmeldenummer: 10014188.6
(22) Anmeldetag: 02.11.2010
(51) Int. Cl.: B29C 70/76, B29C 39/10, B29C 67/00

(54) **Verfahren zum Herstellen von Interieurbauteilen**

(71) Anmelder: EDAG GmbH & Co. KGaA, 36039 Fulda (DE)
(72) Erfinder: Schäfer, Uwe, 36088 Hünfeld-Malges (DE)
(74) Vertreter: Weidner, Ulrich

(57) **Zusammenfassung**

Verfahren zum Herstellen von vorzugsweise für den Einsatz in der Luftfahrttechnik vorgesehenen Interieurbauteilen (1). Derartige Bauteile werden unter anderem unter Verwendung von Aramid-Materialien gefertigt. So ermöglicht der Einsatz von Halbzeugen in Form von Aramid-Wabenplatten (2,3,4) die Umsetzung des Leichtbauprinzips bei Einhaltung der strengen Brandschutzvorgaben. Solche Halbzeuge bestehen aus einer zwischen zwei ebenen, faserverstärkten Kunststoffplatten (3,4) angeordneten Wabenstruktur (2) und liegen nur als ebenes Plattenmaterial vor. Mit dem Verfahren können offene und mit Rundungen versehene Randbereiche vorteilhaft durch Ausgießen von beschichtet werden.

## Beschreibung

Die Erfindung betrifft das Herstellen von vorzugsweise für den Einsatz in der Luftfahrttechnik vorgesehenen Interieurbauteilen.

### Stand der Technik

Bei der Innenausstattung von Flugzeugen, und dabei insbesondere von Passagierflugzeugen für den zivilen Bereich, müssen Bauteile für die Innenausstattung drei wesentliche Anforderungen erfüllen. So müssen solche Bauteile ein ansprechendes und ergonomisch vorteilhaftes Design aufweisen, bei der konstruktiven Gestaltung muss konsequent das Leichtbauprinzip verwirklicht sein und das Bauteil muss strengsten Brandschutz- sowie sonstigen Sicherheitskriterien entsprechen.

Daher sind für solche Innenausstattungsbauteile, wie zum Beispiel Abdeckungen, Klappen oder Ablagen, die üblichen Werkstoffe nicht geeignet sowie die klassischen Konstruktions- und Fertigungsprinzipien nicht umsetzbar. In der Luftfahrttechnik werden daher gattungsgemäße Bauteile unter anderem unter Verwendung von Aramid-Materialien gefertigt. So ermöglicht der Einsatz von Halbzeugen in Form von Aramid-Wabenplatten die Umsetzung des Leichtbauprinzips bei Einhaltung der strengen Brandschutzvorgaben.

Ein Problem besteht darin, dass derartige Wabenplatten aus einer zwischen zwei ebenen, faserverstärkten Kunststoffplatten angeordneten Wabenstruktur bestehen und damit ein derartiges Halbzeug nur als ebenes Plattenmaterial vorliegt. Das bedeutet, dass die offenen Randbereiche, nach dem Prinzip des Abschlusses mittels einer Art Kantenumleimer, verschlossen werden müssen. Die Umsetzung anspruchsvoller Designvorgaben verlangt nun, dass diese Kantenbereiche mit abgerundeten Ecken sowie mit Radien aufweisenden Kantverläufen ausgestattet werden. Das nachträgliche Ansetzen von diesen Vorgaben entsprechenden Abschlussleisten, wie zum Beispiel im Möbelbau und im normalen Innenausbau üblich, scheidet aus Gewichtsgründen sowie aus Brandschutzgründen aus.

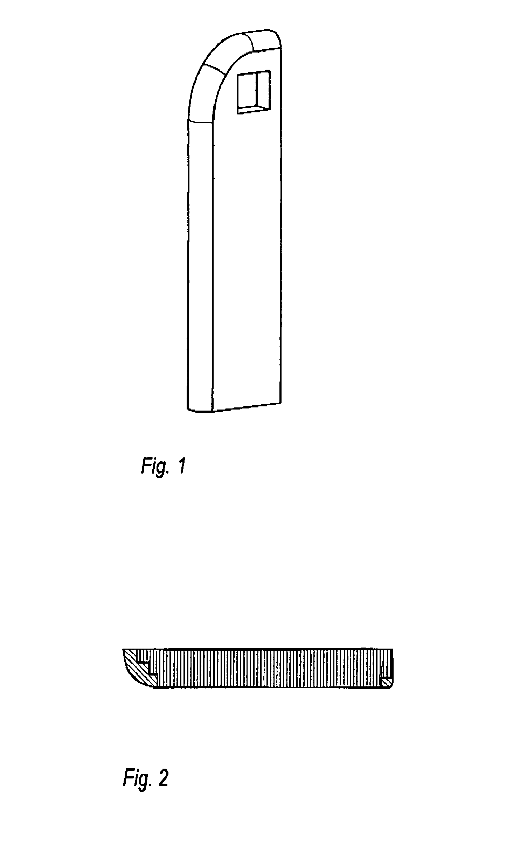

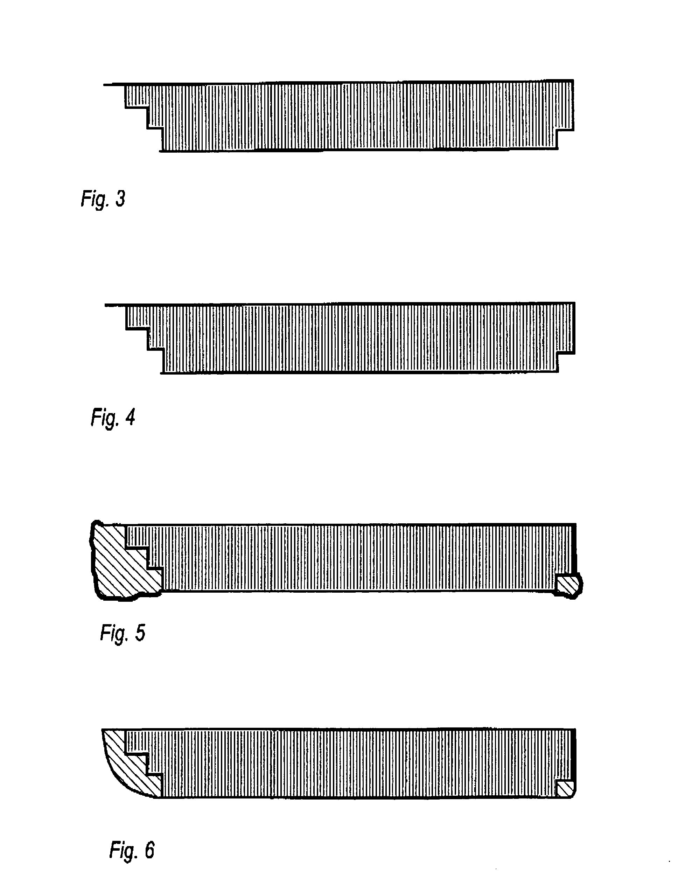

Nach dem Stand der Technik (siehe Figuren 1 bis 6) ist daher folgende, im Wesentlichen vier Arbeitsschritte umfassende Technologie üblich:
Eine Aramid-Wabenplatte, bestehend aus zwei aus Prepreg-Deckplatten und einem dazwischen angeordneten Aramid-Wabenkern, wird an den mit Rundungen zu versehenen Rändern stufenweise auf Untermaß abgefräst. An nicht in Radien verlaufenden Kantenbereichen werden Kantenumleimer aufgeklebt. Auf die abgefrästen Bereiche wird manuell ein aushärtender Kunststoff aufgetragen und entsprechend modelliert. Nach dem Aushärten erfolgt ein NC-Fräsen aller Rundungen mit anschließendem Oberflächenfinish.

Neben dem nicht mehr vertretbaren Arbeitsaufwand besteht ein wesentlicher Nachteil dieser Technologie darin, dass die Ausbildung der mit Rundungen versehenen Kantenbereiche aus einem kompakten Kunststoffmaterial die Leichtbaueigenschaften des Halbzeuges wieder deutlich verschlechtern. Außerdem sollte das Anformen von kompakten Kunststoffschichten aus Brandschutzgründen vermieden werden.

### Aufgabenstellung

Es ist daher Aufgabe der Erfindung, ein Verfahren zum Herstellen von gattungsgemäßen Interieurbauteilen zu schaffen, mit welchem ohne umfangreiche manuelle Arbeiten nur in ebener Form vorliegende Leichtbauplatten in den Kantenbereichen mit Rundungen abgeschlossen werden können.

Ein Vorteil der Erfindung besteht insbesondere darin, dass sämtliche zu verschließenden Kantenbereiche in einem Gießarbeitsgang mit einem mit Rundungen versehenen Kantenabschluss versehen werden können. Durch das maschinelle Angießen der Kantenabschlüsse können gegenüber dem geschilderten Stand der Technik weitaus dünnere Materialschichten realisiert werden. Die Leichtbaueigenschaften des Halbzeuges werden nur marginal beeinflusst. Auch wirkt sich der geringe Materialeinsatz nicht nachteilig auf die Gesamtbrandschutzeigenschaft eines Bauteiles aus. Insbesondere der Wegfall des abschließenden NC-Fräsens senkt den Fertigungsaufwand erheblich.

Durch das Verwenden eines hochfesten Hartschaumstoffes als Kernmaterial werden die oben genannten Parameter weiter optimiert, da durch die nicht mehr vorhandenen offenen und ausgefransten Wabenstrukturen deutlich weniger PU-Kantenfiller eingesetzt werden kann.

Beim Einsatz eines hochfesten Hartschaumstoffes für den Leichtbaukcrn ist es außerdem vorteilhaft möglich, gleichzeitig die Kanten innenliegender Durchbrüche oder Vertiefungen mit Kantenfiller zu beschichten, indem in den Leichtbaukern ein Gießkanal eingebracht wird, der den zwischen dem Bauteil und den Werkzeughälften gebildeten Gießspalt mit einem Durchbruch oder einer Vertiefung verbindet. In die Durchbrüche ragen bei geschlossenem Werkzeug einen Gießspalt bildende Kerne. Weiterhin kann ein solcher Gießkanal zu in den Werkzeughälften oder im Bauteil ausgebildeten Kavitäten geführt werden, welche dann beim Gießvorgang mit KanLenfiller ausgefüllt werden. In solchen Vertiefungen oder Materialanhäufungen können zum Beispiel Bedien- oder Montageelemente angeordnet werden.

Das Einbringen der Gießkanäle in den Leichtbaukern ermöglicht das Realisieren von Gießwerkzeugen mit niedrigerem Kompliziertheitsgrad bei relativer Gestaltungsfreiheit im Kantenbereich.

### Ausführungsbeispiel

Ausführungsbeispiele der Erfindungen sind im Folgenden näher beschrieben.

Es zeigen:
- Fig. 1 und 2: ein Bauteil nach dem Stand der Technik
- Fig. 3 bis 6: die Herstellungsschritte nach dem Stand der Technik
- Fig. 7 bis 8: die Herstellungsschritte nach dem erfindungsgemäßen Verfahren
- Fig. 9, 10, 11: Einzelheiten bei der Herstellung von Bauteilen mit innenliegenden Durchbrüchen oder Vertiefungen

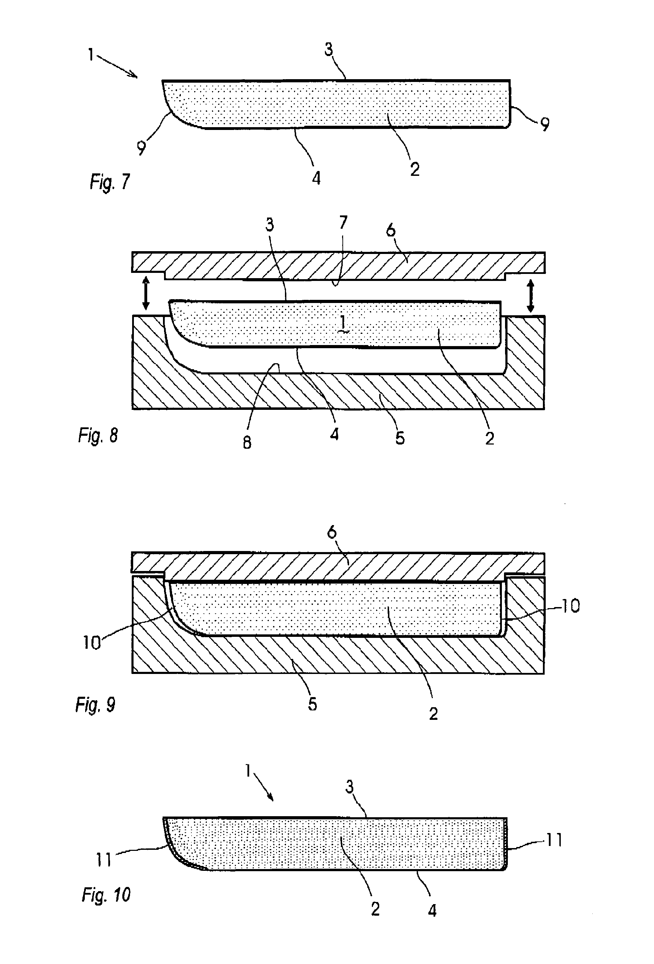

Im dargestellten Ausführungsbeispiel wird das Bauteil 1 (Fig. 7) aus einer Leichtbauplatte mit einen Leichtbaukern 2 aus einem hochfesten Hartschaumstoff, zum Beispiel ROHACELL* gefertigt. Der Leichtbaukern 2 ist beidseitig mit Deckschichten in Form der Prepregs 3, 4 versehen.

In einem ersten Arbeitsschritt wird die gewünschte Kantenform des Bauteils durch NC-Fräsen erzeugt. Dabei werden alle umlaufenden Bauteilkanten 9 auf ein vorgegebenes Untermaß gefräst. Das derart vorgefertigte Bauteil 1 wird dann in die Kavität eines Gicßwerkzeuges (Fig. 8) so eingelegt, dass das Bauteil 1 mit dem Prepreg 4 auf der ebenen Formfläche 8 des Werkzeugunterteils 5 aufliegt. Das Gießwerkzeug ist als Eintauchwerkzeug ausgebildet, das heißt, das Abdichten beim Gießvorgang erfolgt durch das Eintauchen des Werkzeugoberteils 6 in die Kavität des Werkzeugunterteils 5. Beim Schließen des Gießwerkzeuges kommt es zum kraftbeaufschlagten Anliegen der Formfläche 7 des Werkzeugoberteils 6 auf dem Prepreg 3. Die Prepregs 3 und 4 liegen nun jeweils dicht an den Formflächen 7 und 8 an.

Zwischen den auf Untermaß gefrästen Bauteilkanten 9, 10 und den auf das Bauteilmaß gearbeiteten Werkzeugflächen im Werkzeugunterteil 5 entsteht ein Spalt 10, welcher mit einem PU-Kantenfiller 11 ausgegossen wird. Dabei kommt es zu einem übergangslosen Anschluss an den Kanten der Prepregs 3 und 4, so dass nach dem Aushärten des PU-Kantenfillers 11 und dem Ausformen des Bauteils 1 ein abschließender Lackiervorgang ohne weitere Oberflächenbearbeitung erfolgen kann.

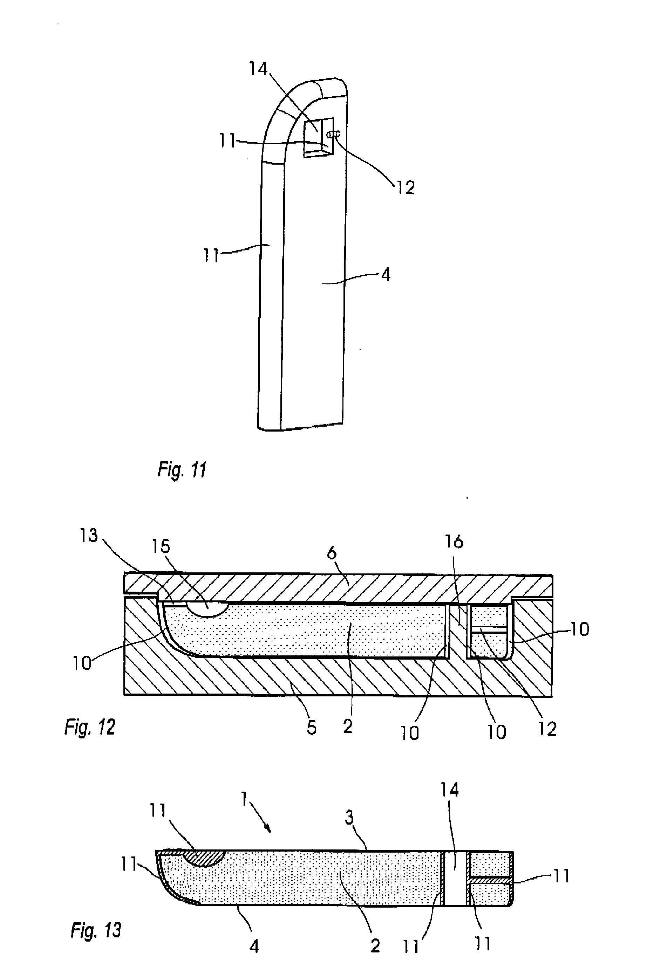

Die Figuren 11, 12 und 13 betreffen eine besondere Ausführungsform des Verfahrens, wobei im Bauteil 1 ein Durchbruch 14 (Fig. 11) und in den Figuren 12 und 13 eine Vertiefung 15 sowie ein Durchbruch 14 ausgebildet sind. Danach erfolgt zusätzlich zum Untermaßfräsen der Bauteilkanten 9 das Einbringen von Gießkanälen 12, 13 in den vorzugsweise aus Hartschaumstoff bestehenden Leichtbaukern 2, wodurch der Gießspalt 10 mit dem innenliegenden Durchbruch 14 und der Ausnehmung 15 verbunden wird. Bei geschlossenem Werkzeug ragt ein Kern 16 spaltbildend vom Werkzeugunterteil 5 in den Durchbruch 14.

Beim Gießvorgang gelangt somit PU-Kantenfiller 11 über die Gießkanäle 12, 13 in die zu beschichtenden bzw. zu füllenden Bereiche.

Der Gießspalt 13 wird dabei durch eine spaltbildende Freifräsung an der Oberseite des Leichtbaukerns 2 erzeugt.

### Bezugszeichenliste

- 1: Bauteil
- 2: Leichtbaukern
- 3: Prepreg
- 4: Prepreg
- 5: Werkzeugunterteil
- 6: Werkzeugoberteil
- 7: Werkzeugfläche
- 8: Werkzeugfläche
- 9: Bauteilkante
- 10: Spalt
- 11: PU-Kantenfiller
- 12: Gießkanal
- 13: Gießkanal
- 14: Durchbruch
- 15: Ausnehmung
- 16: Kern

## Patentansprüche

1. Verfahren zum Herstellen von Interieurbauteilen, welche aus zwei Deckschichten und einem dazwischen angeordneten Leichtbaukern bestehen, wobei die offenen Kanten mit einem nachträglich aufgebrachten Kantenabschluss versehen werden, **gekennzeichnet durch** die Schritte
- Fräsen der Bauteilkanten auf Untermaß,
- Einlegen des Bauteils in die Kavität eines schließbaren Eintauchgießwerkzeuges, wobei das Bauteil mit einer Deckschicht auf einer ebenen Werkzeugfläche aufliegt,
- Schließen des Gießwerkzeuges, wobei das eintauchende Werkzeugteil mit einer ebenen Werkzeugfläche kraftbeaufschlagt auf der anderen Deckschicht zur Anlage kommt,
- Ausgießen des zwischen den auf Untermaß gefrästen Kantenflächen des Bauteils und den auf Maß gearbeiteten Werkzeuginnenflächen gebildeten Gießspaltes mit einem aushärtbaren Kantenfiller.

2. Verfahren zum Herstellen von Interieurbauteilen nach Anspruch 1, **gekennzeichnet durch** die Verwendung eines Leichtbaukerns aus einem Hartschaumstoff.

3. Verfahren zum Herstellen von Interieurbauteilen nach Anspruch 1, **gekennzeichnet durch** die Verwendung eines Leichtbaukerns aus Aramid-Wabenmaterial.

4. Verfahren zum Herstellen von Interieurbauteilen nach Anspruch 1 und 2, **gekennzeichnet durch** das Erzeugen eines Gießkanals im Leichtbaukern, wobei der Gießkanal den zwischen dem Bauteil und den Werkzeuginnenflächen gebildeten Gießspalt mit innenliegenden Durchbrüchen oder Vertiefungen verbindet und beim Gießvorgang Kantenfiller über den Gießkanal in die Durchbrüche oder Vertiefungen geleitet wird.

5. Verfahren zum Herstellen von Interieurbauteilen nach Anspruch 1 und 2, **gekennzeichnet durch** das Erzeugen einer Freifräsung am Leichtbaukern, wobei die Freifräsung den zwischen dem Bauteil und den Werkzeuginnenflächen gebildeten Gießspalt mit innenliegenden Durchbrüchen oder Vertiefungen verbindet und beim Gießvorgang Kantenfiller über die Freifräsung in die Durchbrüche oder Vertiefungen geleitet wird.
